# EUROPÄISCHE PATENTSCHRIFT

(11) **EP 2 616 329 B1**
(45) Veröffentlichungstag und Bekanntmachung des Hinweises auf die Patenterteilung: **30.11.2016**
(21) Anmeldenummer: 11754414.8
(22) Anmeldetag: 08.09.2011
(51) Int. Cl.: B63H 21/30, B63J 3/02

(54) **SCHIFF MIT ÖFFNUNG ZUM ENTFERNEN EINES ENERGIEVERSORGUNGSSYSTEMS**
SHIP, POWER SUPPLY SYSTEM FOR THE SHIP, AND METHOD FOR CONTROLLING SAID POWER SUPPLY SYSTEM
NAVIRE, SYSTÈME D'ALIMENTATION EN ÉNERGIE POUR CE NAVIRE ET PROCÉDÉ DE COMMANDE CORRESPONDANT

(30) Priorität: 16.09.2010 DE 102010040904
(43) Veröffentlichungstag der Anmeldung: 24.07.2013
(73) Patentinhaber: Wobben Properties GmbH, 26607 Aurich (DE)
(72) Erfinder: ROHDEN, Rolf, 26607 Aurich (DE)
(74) Vertreter: Eisenführ Speiser
(86) Internationale Anmeldenummer: PCT/EP2011/065528
(87) Internationale Veröffentlichungsnummer: WO 2012/034920

(56) Entgegenhaltungen:
- EP-A1- 2 218 637
- WO-A1-00/06450
- WO-A1-2011/127987
- WO-A2-2006/133950
- GB-A- 2 046 689
- GB-A- 2 161 773
- US-A1- 2007 233 364
- US-B1- 6 592 412
- US-B1- 7 185 599
- US-B1- 7 533 622

## Beschreibung

Die vorliegende Erfindung betrifft ein Schiff, insbesondere ein Frachtschiff, mit einem Energieversorgungssystem nach dem Oberbegriff von Anspruch 1. Die Erfindung betrifft weiterhin ein Energieversorgungssystem für ein Schiff, insbesondere Frachtschiff nach dem Oberbegriff von Anspruch 8. Die Erfindung betrifft weiterhin ein Verfahren zur Steuerung eines Energieversorgungssystems eines Schiffs nach dem Oberbegriff von Anspruch 9.

Schiffe der vorstehend genannten Art beziehen elektrische Energie üblicherweise von einem bordeigenen Energieversorgungssystem. Das Energieversorgungssystem weist bei bekannten Schiffen einen oder mehrere dieselelektrische Systeme auf, die eine mechanisch erbrachte Arbeitsleistung in elektrische Energie wandeln. Unter einem dieselelektrischen System wird ein System verstanden, welches zur Erzeugung elektrischer Energie eingerichtet ist und eine (Diesel-) Verbrennungskraftmaschine zum Bereitstellen einer mechanischen Arbeitsleistung aufweist, welche mit einem Generator zur Erzeugung elektrischer Energie gekoppelt ist.

Mittels der Energieversorgungssysteme werden auf Schiffen der eingangs genannten Art das Bordnetz, Kommunikationseinrichtungen, Hilfs- oder Hauptantriebe mit elektrischer Energie versorgt.

Druckschrift DE 10 2005 028 447 der hiesigen Anmelderin offenbart ein Schiff mit einem per Elektromotor angetriebenen Schraubenkörper und elektrisch angetriebenen Querstrahlrudern. Zusätzlich sind in der genannten Druckschrift eine Mehrzahl von Magnus-Rotoren auf dem Schiff vorgesehen, die zusätzlich Antriebskraft zur Verfügung stellen und ebenfalls mittels Elektromotoren angetrieben werden. Magnus-Rotoren werden auch als Flettner-Rotoren oder Segel-Rotoren bezeichnet.

Als allgemeiner weiterer Stand der Technik sei auf die Dokumente DE 34 26 333 C2, JP 04100799 A, US 3,602,730, WO 00/06450 A1, GB 2 391 502 A, DE 10 2005 028 447 A1 und EP 2 243 699 A1 sowie auf den Artikel "Wartungskonzept für moderne Dieselmotoren" aus dem Handbuch der Werften, Prof. Dr.-Ing. H. Keil, 1998, Seiten 279-280 verwiesen.

Die Bereitstellung einer zuverlässig funktionierenden Energieversorgung ist für den Betrieb eines Schiffs der eingangs genannten Art von äußerster Wichtigkeit. Auf Grund ständiger Benutzung sind die dieselelektrischen Systeme einem nicht zu vermeidenden Verschleiß ausgesetzt und müssen nach Erreichen einer bestimmten Laufzeit regelmäßig einer Wartung unterzogen werden. Während der Durchführung von Wartungsarbeiten ist der Betrieb des Schiffs entweder stark beeinträchtigt oder (in der Regel) nicht möglich, da das Schiff in einer Werft oder jedenfalls in einem Hafen liegen muss, um gewartet zu werden. Sofern kleinere Wartungsarbeiten durchzuführen sind, können diese zwar an Bord des Schiffes und unter einigen Umständen auch während der Fahrt eines Schiffs vorgenommen werden. In solchen Fällen muss allerdings eine Wartungs-Belegschaft an Bord mitgeführt werden, was ebenfalls deutliche Kosten verursacht.

Der bei bekannten Schiffen zu betreibende Wartungsaufwand wird im Stand der Technik als Nacheil empfunden.

Demzufolge lag der vorliegenden Erfindung die Aufgabe zu Grunde, ein Schiff, ein Energieversorgungssystem und ein Verfahren zur Steuerung des selbigen anzugeben, welche die Wartbarkeit verbessern.

Die Erfindung löst die ihr zu Grunde liegende Aufgabe bei einem Schiff der eingangs genannten Art, indem das Schiff nach den Merkmalen von Anspruch 1 ausgebildet ist. Das erfindungsgemäße Schiff weist eine Mehrzahl von dieselelektrischen Systemen zur Bereitstellung elektrischer Energie auf, wobei mehreren dieselelektrischen Systemen jeweils eine gemeinsame Öffnung zum Entfernen der dieselelektrischen Systeme zugeordnet ist.

Die vorliegende Erfindung beruht auf der Erkenntnis, dass die Wartung am zeit- und kostensparendsten vorgenommen werden kann, indem sowohl die Liegezeit in einem Hafen als auch die zum Austausch wartungsbedürftiger Komponenten benötigte Montagezeit weitestmöglich verkürzt wird. Dies wird erreicht, wenn im Hafen und während der Fahrt eines Schiffs keine Wartungsarbeiten durchgeführt werden müssen, sondern wartungsbedürftige Komponenten bei Erreichen eines Hafens schnellstmöglich gegen neue oder bereits gewartete Komponenten ausgetauscht werden können. Die vorliegende Erfindung ermöglicht ebendies, indem sie jeweils mehreren dieselelektrischen Systemen eine oder mehrere gemeinsame Öffnung zuordnet, durch die die dieselelektrischen Systeme zeitökonomisch ausgetauscht werden können. Es sind auf dem Schiff, welches im Innenraum zur bestmöglichen Ausschöpfung des Ladevolumens nur äußerst begrenzten Platz für die Unterbringung von Funktionselementen bietet, Ein- und Ausbaumaßnahmen nur begrenzt möglich. Durch das vorteilhafte Anbringen einer Öffnung, vorzugsweise in einem Deckenabschnitt oberhalb der dieselelektrischen Systeme können diejenigen der dieselektrischen Systeme, die wartungsbedürftig sind, jedoch effizient durch diese Öffnung hindurch ausgewechselt werden.

Vorzugsweise ist die gemeinsame Öffnung bzw. die gemeinsamen Öffnungen mittels einer Deckelplatte verschließbar und erstreckt sich durch die Decke oberhalb der dieslelektrischen Systeme hindurch. Weiter vorzugsweise sind jeweils mehrere dieselelektrische Systeme in einem gemeinsamen Raum, beispielsweise dem Maschinenraum, angeordnet, welchem die gemeinsame Öffnung zugeordnet ist. Der gemeinsame Raum ist vorzugsweise unterhalb des Laderaums angeordnet, wobei der Boden des Laderaums der Decke des Raums der dieselelektrischen Systeme entspricht. Zum Erreichen einer gleichmäßigeren Massenverteilung sind vorzugsweise mehrere Gruppen von dieselelektrischen Systemen in Räumen über das Schiff verteilt. Vorzugsweise sind die Räume im Vorschiff angeordnet, um ein Gegengewicht zu einem Antrieb der Schiffsschraube zu schaffen, welcher Achtern angeordnet ist. Ein besonderer Vorteil der vorliegenden Erfindung ist auch in der Verwendung einer Mehrzahl von dieselelektrischen Systemen in dem Energieversorgungssystem zu sehen. Wenn man davon ausgeht, dass eine bestimmte Menge Energie an Bord eines Schiffes benötigt wird, ist man bei bekannten Schiffen bislang davon ausgegangen, dass es am ökonomischsten sei, möglichst wenige und möglichst leistungsstarke dieselelektrische Systeme mit groß dimensionierten Motoren auf die antizipierte Bedarfssituation hin auszulegen und in das Schiff einzubauen. Die Wartbarkeit eines Schiffs gemäß der vorliegenden Erfindung ist indes dadurch besonders vorteilhaft beeinflusst, dass anstelle möglichst weniger großer Aggregate eine Mehrzahl kleinerer dieselelektrischer Systeme vorgesehen ist, die jeweils durch die ihnen zugeordnete Öffnung mit viel geringerem Aufwand für externe Wartungsarbeiten entfernbar sind. Dies ist bei einem Schiff mit lediglich einem oder gegebenenfalls wenigen Groß-Systeme nicht möglich.

Die Erfindung wird dadurch weitergebildet, dass die dieselelektrischen Systeme innerhalb des Schiffs jeweils zwischen einer Betriebsposition und einer Montage/Demontage-Position unterhalb der gemeinsamen Öffnung bewegbar sind. Durch die Bewegbarkeit der dieselelektrischen Systeme zwischen einer Betriebsposition und einer Montage/Demontage-Position ist einerseits die Raumausnutzung innerhalb des Raums, in welchem die dieselelektrischen Systeme jeweils angeordnet sind, zum einfacheren Durchqueren des Raums während der Fahrt oder außerhalb eines Vorgangs des Tauschs eines oder mehrerer dieselelektrischer Systeme verbessert. Andererseits lässt sich die für einen Tausch eines oder mehrerer dieselelektrischer Systeme benötigte Zeit noch weiter verkürzen, indem man bereits vor dem Beginn des eigentlichen Austauschvorgangs durch die gemeinsame Öffnung das dieselelektrische System aus einer Betriebsposition in die Montage/Demontage-Position verbringt. Hierbei ist es besonders vorteilhaft, dass eine Mehrzahl von dieselelektrischen Systemen an Bord des Schiffs vorgesehen ist. Die Anzahl der dieselelektrischen Systeme ist vorzugsweise so gewählt, dass nicht ständig alle dieslelektrischen Systeme des Schiffs in Betrieb sind, so dass das Abstellen eines dieselelektrischen Systems und Verbringen aus der Betriebsposition in die Montage/Demontage-Position durch die übrigen dieselelektrischen Systeme kompensierbar ist. Durch das Bewegen des dieselelektrischen Systems von der Betriebsposition in die Montage/Demontage-Position lässt sich der schnelle Austausch durch die gemeinsame Öffnung also bereits vor dem Erreichen eines Hafens vorbereiten, in welchem der Austausch stattfinden soll. Vorzugsweise sind drei oder mehr dieselelektrische Systeme vorgesehen, besonders bevorzugt sechs oder mehr dieselelektrische Systeme.

In einer bevorzugten Ausführungsform der vorliegenden Erfindung sind die dieselelektrischen Systeme mittels Verfahrmitteln, vorzugsweise mittels Schienen, verfahrbar. Durch das Vorsehen von Verfahrmitteln lässt sich sicherstellen, dass die dieselelektrischen Systeme nicht in freier Bewegung zwischen der Betriebsposition und der Montage/Demontage-Position bewegt werden, sondern dass diese Bewegung entlang einer definierten und vorzugsweise geführten Bahn erfolgt. Dies erleichtert zum einen die Positionierung der dieselelektrischen Systeme in der Betriebs- oder Montage/Demontage-Position und verringert weiterhin die Beschädigungs- und/oder Verletzungsgefahr für umliegende Komponenten bzw. etwaige Bediener während der Bewegung der dieselelektrischen Systeme.

Als Verfahrmittel können alternativ zu einer Schienenkonfiguration auch Rollen oder andere Gleit-Abschnitte vorgesehen sein. Die Verfahrmittel können vorzugsweise auch Mittel zur maschinellen Unterstützung des Bewegens von der einen in die andere Position umfassen, beispielsweise Hydraulik- oder Pneumatikantriebe, oder Flaschenzüge.

Gemäß einer weiteren bevorzugten Ausführungsform weist das Schiff entfernbare Bodenplatten auf, die oberhalb der Verfahrmittel angeordnet sind. Die Bodenplatten sind dazu ausgebildet, den Raum, in welchem die Generatoren angeordnet sind, betretbar zu gestalten. Gleichzeitig wird mittels der Bodenplatten verhindert, dass Bediener über die Verfahrmittel stolpern können, oder diese beschädigen können. Die Bodenplatten können so ausgestaltet sein, dass ein Verfahren bzw. Bewegen der dieselelektrischen Systeme mittels der Verfahrmittel erst ermöglicht ist, wenn die Bodenplatten entfernt sind, wodurch die passive Sicherheit weiter erhöht wird.

Die dieselelektrischen Systeme sind vorzugsweise in Betriebsposition arretierbar. Die Arretierung erfolgt vorzugsweise mittels Verschrauben oder Verrasten. Solche Arretierungsmittel sind besonders bevorzugt zusätzlich zu den Bodenplatten zur Arretierung der dieselelektrischen Systeme vorgesehen, auch um eventuelle Beschädigungen der Bodenplatten durch unbeabsichtigtes Bewegen der dieselelektrischen Systeme relativ zu den Bodenplatten zu begrenzen oder zu verhindern.

Das erfindungsgemäße Schiff weist in einer bevorzugten Ausführungsform weiterhin einen Schiffskran auf, der dazu eingerichtet ist, mindestens eines der dieselelektrischen Systeme durch die gemeinsame Öffnung aus dem Inneren des Schiffs zu entfernen und/oder in das Innere des Schiffs einzuführen. Der Schiffskran ist vorzugsweise derart angeordnet, dass er durch Herablassen des Kranhakens durch den Laderaum hindurch und durch die gemeinsame Öffnung hindurch in den Raum, in welchem die dieselelektrischen Systeme angeordnet sind, hineinragt. Durch den Schiffskran wird es mithin ermöglicht, den Austausch von dieselelektrischen Systemen in jedwedem Hafen oder an jedwedem Anleger vorzunehmen, unabhängig davon, ob uferseitig ein Kran vorhanden ist oder nicht. Der Schiffskran ist vorzugsweise auch in der Lage, eine optional vorhandene Abdeckung der gemeinsamen Öffnung anzuheben oder abzusenken. Besonders bevorzugt befindet sich bei einem Schiff mit Schiffskran und gemeinsamer Öffnung die Montage/Demontage-Position der dieselelektrischen Systeme direkt unterhalb der gemeinsamen Öffnung, so dass der Schiffskran ohne ein seitliches Verschwenken des Krankhakens aus der lotrechten Position heraus mit dem dieselelektrischen System oder vorzugsweise einem Anschlag des dieselelektrischen Systems in Eingriff bringbar ist. Dies begünstigt eine ausschließlich vertikale Bewegung des dieselelektrischen Systems während des Austauschs.

Das erfindungsgemäße Schiff weist eine dem Energieversorgungssystem zugeordnete Steuereinheit auf, welche in Abhängigkeit eines vorgegebenen Energiebedarfs zum Zu- und Abschalten Einzelner oder Mehrerer der dieselelektrischen Systeme eingerichtet ist. Der Energiebedarf an Bord eines Schiffs ändert sich zu unterschiedlichen Zeitpunkten in Abhängigkeit des jeweiligen

Energiebedarfs mitunter stark. Würde man den Energiebedarf nicht situationsangepasst variieren können, müsste man stetig verhältnismäßig große Energiereserven bereithalten, was einen erhöhten Kraftstoffverbrauch zur Folge hätte. Vor diesem Hintergrund ist es besonders vorteilhaft, eine Steuereinheit vorzusehen, welche den Energiebedarf überwacht und situationsadäquat weitere dieselelektrische Systeme zuschaltet oder überflüssige dieselelektrische Systeme abschaltet, um jederzeit einen optimalen Energiebedarf und Energieverbrauch (durch die dieselelektrischen Systeme) gewährleistet.

Die Steuereinheit ist zum Erfassen der Betriebsstundenanzahl jedes dieselelektrischen Systems ausgebildet. Die Betriebsstundenzahl eines dieselelektrischen Systems ist eine wichtige Kenngröße zum Festlegen eines Wartungsintervalls bzw. zum Feststellen, ob das dieselelektrische System wartungsbedürftig ist oder nicht. Die Steuereinheit ist vorzugsweise dazu ausgebildet, ein dieselelektrisches System dann nicht zuzuschalten, wenn dessen Betriebsstundenzahl einen kritischen, die Wartungsbedürftigkeit anzeigenden Wert erreicht hat. Die Steuereinheit ist vorzugsweise dazu eingerichtet, anstelle eines solchen dieselelektrischen Systems unter den verbleibenden dieselelektrischen Systemen auszuwählen, welches dieselelektrische Systamzugeschaltet werden soll.

Weiter ist die Steuereinheit dazu eingerichtet, eine Auswahl bezüglich des Zu- und Abschaltens einzelner dieselelektrischer Systeme in Abhängigkeit der jeweils erfassten Betriebsstunden derart zu treffen, dass zwischen den dieselelektrischen Systemen ein, vorzugsweise jeweils gleichmäßiger, Unterschied bezüglich der Betriebsstundenanzahlen eingehalten wird. Es hat sich als besonders vorteilhaft herausgestellt, die dieselelektrischen Systeme nicht möglichst gleichmäßig zu nutzen, sondern eine gewollte "Ungleichverteilung" der Nutzung der dieselelektrischen Systeme einzuhalten, aus folgendem Grund: Wenn alle dieselelektrischen Systeme in dem Schiff gleichmäßig ausgelastet werden, erreichen sie alle nach einer bestimmten, gleichen Zeit eine kritische Betriebsstundenanzahl und werden zur gleichen Zeit allesamt wartungsbedürftig. In der Folge müssen zu einem zeitnahen Termin alle dieselelektrischen Systeme gewartet werden. Für den Wartungsintervall steht somit keine Energieversorgung zur Verfügung, und das Schiff ist nicht einsatzfähig. Wenn aber hingegen nur ein dieselelektrisches System seinen Wartungszeitpunkt erreicht hat, die anderen aber noch nicht, muss nur dieses eine dieselelektrische System ausgetauscht werden. Ein Betrieb des Schiffes ohne dieses eine dieselelektrische System nur mit den anderen dieselelektrischen Systemen ist möglich, und ansonsten ist auch der Austausch des dieselelektrischen Systems mit minimalem Zeitaufwand möglich, ohne den Betrieb des Schiffes zu gefährden. Durch die Staffelung des Unterschieds in der Betriebsstundenzahl der verschiedenen dieselelektrischen Systeme lassen sich die Abstände der Wartungsintervalle und der durchzuführenden Austauschvorgänge der dieselelektrischen Systeme mit wenig Aufwand vorgeben und vorhersagen. Weiterhin lässt sich hiermit eine Rotation von dieselelektrischen Systemen durchführen, indem dem Schiff bzw. dem Energieversorgungssystem beispielsweise eine Anzahl von n+x dieselelektrischen Systemen zugeordnet ist, wobei n die Anzahl der auf dem Schiff in Betriebsposition verbauten dieselelektrischen Systeme darstellt. Die x-vielen zusätzlichen dieselelektrischen Systeme werden jeweils extern gewartet und für einen Austausch bereitgehalten, während die n-vielen übrigen dieselelektrischen Systeme auf dem Schiff zur Anwendung kommen.

Ein Schiff gemäß einer besonders bevorzugten Ausführungsform der vorliegenden Erfindung weist mindestens einen Magnus-Rotor auf, der mittels von dem Energieversorgungssystem bereitgestellter elektrischer Energie in Rotation versetzbar ist. Der Magnus-Rotor weist vorzugsweise einen zylindrischen Rotationskörper auf, der zur Ausnutzung des Magnus-Effekts ausgebildet ist. Der Magnus-Effekt bewirkt die Ausbildung einer Antriebskraft, welche quer zu der Richtung eines den Rotor anströmenden Fluids ausgerichtet ist.

Weiter vorzugsweise ist das Energieversorgungssystem zur Versorgung eines oder mehrerer Elektromotoren zum Antrieb einer Schiffsschraube und/oder eines oder mehrerer Querstrahlruder ausgebildet. Der Energiebedarf der vorstehend genannten Antriebsysteme ist verglichen mit dem übrigen Strombedarf des Bordnetzes hoch, so dass die Zuverlässigkeit und gute Wartbarkeit bei einem dergestalt ausgebildeten Schiff besonders zum Tragen kommt.

Die Erfindung löst die zugrundeliegende Aufgabe bei einem Energieversorgungssystem der eingangs genannten Art, indem es gemäß Anspruch 8 ausgebildet ist, und eine Mehrzahl von dieselelektrischen Systemen zur Bereitstellung elektrischer Energie aufweist, die durch eine gemeinsame Öffnung des Schiffs entfernbar sind. Die gemeinsame Öffnung zum Entfernen der dieselelektrischen Systeme ist vorzugsweise mittels einer Deckelplatte verschließbar und erstreckt sich durch das Deck oberhalb der dieselelektrischen Systeme hindurch. In dem Energieversorgungssystem kommen die bereits vorstehend unter Bezugnahme auf das erfindungsgemäße Schiff genannten Vorteile und Merkmale zum Tragen.

Das Energieversorgungssystem ist mit einer Steuereinheit versehen, welche eine Einheit zum Erfassen der Betriebsstunden der dieselelektrischen Systeme des Schiffs, und eine Einheit zum Feststellen eines Wartungsfalls, wenn ein dieselelektrisches System eine vorbestimmte Anzahl von Betriebsstunden erreicht hat, aufweist. Die vorstehend genannten Einheiten können analoge oder digitale Instrumente aufweisen, und dementsprechend analoge oder digitale Anzeige-Mittel umfassen.

Die Steuereinheit weist eine Einheit zum Vorgeben eines Energiebedarfs, eine Einheit zum Bestimmen der für den vorgegebenen Energiebedarf benötigten Anzahl von dieselelektrischen Systemen des Schiffs, und eine Schalteinheit zum Zu- und Abschalten eines oder mehrerer dieselelektrischer Systeme in Abhängigkeit der jeweils erfassten Betriebsstunden derart, dass zwischen den dieselelektrischen Systemen ein, vorzugsweise jeweils gleichmäßiger Unterschied bezüglich der Betriebsstundenanzahlen eingehalten wird, auf. Die Einheit zum Vorgeben eines Energiebedarfs ist vorzugsweise dazu eingerichtet, den tatsächlichen Energiebedarf des Bordnetzes stetig abzufragen und einen für den Energiebedarf repräsentativen Signalwert als Ausgangssignal bereitzustellen. Die Einheit zum Bestimmen der Anzahl von dieselelektrischen Systemen ist vorzugsweise dazu eingerichtet, auf Grund des vorgegebenen Energiebedarfs die benötigte Anzahl von dieselelektrischen Systemen festzulegen. Besonders bevorzugt werden die dieselelektrischen Systeme so ausgewählt, dass sie in einem jeweils optimalen Arbeitsbereich Leistung zu Verfügung stellen und weder über- noch unterlastet werden. Die Schalt-Einheit ist dazu eingerichtet, in Abhängigkeit der vorstehend genannten Einheiten die entsprechenden dieselelektrischen Systeme zuzuschalten oder abzuschalten. Dieselelektrische Systeme, die bereits einen die Wartungsbedürftigkeit anzeigenden Wert der Betriebsstundenanzahl erreicht oder überschritten haben, werden von der Schalt-Einheit bevorzugt nicht zugeschaltet, aber bevorzugt abgeschaltet. Die Schalt-Einheit ist vorzugsweise auch dazu ausgebildet, dieselelektrische Systeme ab- und andere dieselelektrische Systeme zuzuschalten, wenn ein voreingestellter Unterschied hinsichtlich der Betriebsstundenanzahl der unterschiedlichen dieselelektrischen Systeme (wieder)hergestellt werden soll. Dies erfolgt vorzugsweise auch unabhängig von einer sich verändernden Eingangsgröße wie beispielsweise des vorgegebenen Energiebedarfs.

Die Erfindung löst die zugrundeliegende Aufgabe durch ein Verfahren nach Anspruch 9, umfassend die Schritte: Erfassen der Betriebsstunden der dieselelektrischen Systeme des Schiffs, und Feststellen eines Wartungsfalls, wenn ein dieselelektrisches System eine vorbestimmte Anzahl von Betriebsstunden erreicht hat,

Ermitteln und/oder Vorgeben eines Energiebedarfs, Bestimmen der für den vorgegebenen Energiebedarf benötigten Anzahl von dieselelektrischen Systemen, und Zu- und Abschalten eines oder mehrerer dieselelektrischer Systeme in Abhängigkeit der jeweils erfassten Betriebsstunden derart, dass zwischen den dieselelektrischen Systemen ein vorzugsweise gleichmäßiger Unterschied bezüglich der Betriebsstundenanzahlen eingehalten wird.

Nachfolgend wird die Erfindung anhand bevorzugter Ausführungsformen und unter Bezugnahme auf die angefügten Figuren näher beschirieben. Hierbei zeigt:
- Figur 1: eine räumliche Darstellung eines erfindungsgemäßen Schiffs,
- Figur 2: eine schematische Draufsicht auf das Schiff gemäß Figur 1,
- Figur 3: eine schematische Querschnittsansicht aus dem Inneren des Schiffs gemäß Figur 1,
- Figur 4: eine schematische Darstellung eines Energieversorgungssystems des Schiffs gemäß Figur 1, und
- Figur 5: eine schematische Darstellung einer Steuereinheit eines Energieversorgungssystems gemäß der vorliegenden Erfindung.

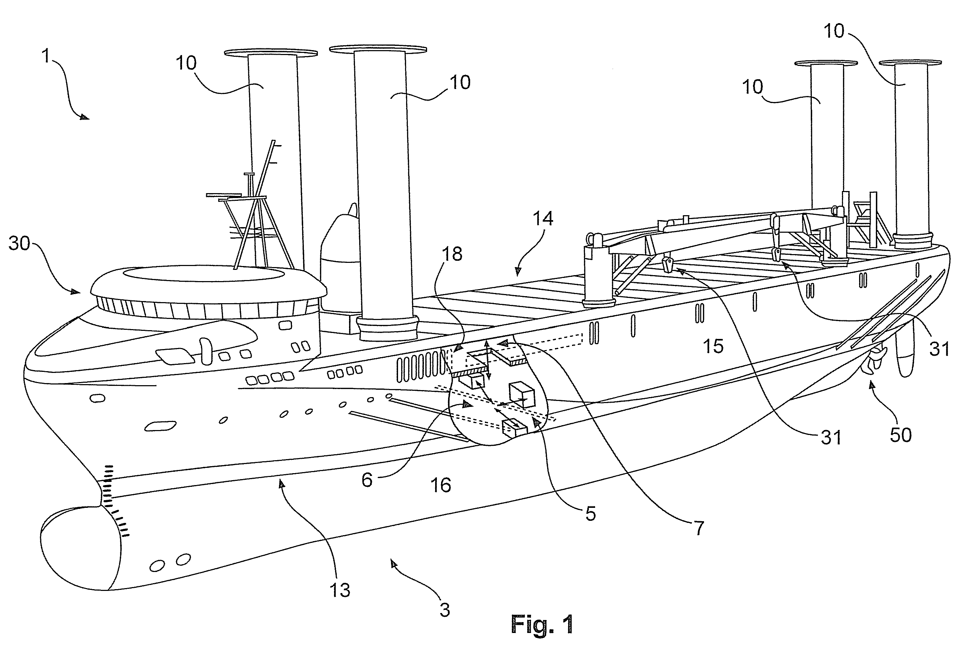

Fig. 1 zeigt eine schematische Darstellung eines Schiffes (1) gemäß einem ersten Ausführungsbeispiel. Das Schiff 1 weist dabei einen Rumpf bestehend aus einem Unterwasserbereich 16 und einen Überwasserbereich 15 auf. Ferner kann das Schiff 1 z. B. vier Magnus-Rotoren bzw. Flettner-Rotoren 10 aufweisen, welche an den vier Ecken des Rumpfes angeordnet sein können. Das Schiff 1 weist eine im Vorschiff angeordnete Brücke 30 auf. Das Schiff 1 weist unter Wasser eine Schraube 50 auf. Für eine verbesserte Manövrierfähigkeit kann das Schiff 1 ebenfalls Querstrahlruder aufweisen, wobei vorzugsweise eines am Heck und eines bis zwei Querstrahlruder am Bug vorgesehen sind. Vorzugsweise sind diese Querstrahlruder elektrisch angetrieben. Die Brücke 30 sowie alle Aufbauten oberhalb des Wetterdecks 14 eine aerodynamische Formgebung aufweisen, um den Windwiderstand zu reduzieren. Dies wird insbesondere dadurch erreicht, dass scharfe Kanten und scharfkantige Anbauteile im Wesentlichen vermieden werden. Um den Windwiderstand zu minimieren, werden möglichst wenige Aufbauten vorgesehen.

Das Schiff 1 gemäß dem ersten Ausführungsbeispiel stellt insbesondere ein Frachtschiff dar, das speziell für den Transport von Windenergieanlagen und deren Komponenten ausgelegt ist. Der Transport von Windenergieanlagen sowie deren entsprechenden Komponenten ist mit handelsüblichen Containerschiffen nur bedingt realisierbar, da die Komponenten einer Windenergieanlage einen entsprechenden Raumbedarf darstellen, welcher nicht den handelsüblichen Containermaßen entspricht, während die Massen einzelner Komponenten im Vergleich zu ihrem Raumbedarf gering sind. Beispielhaft seien hier Rotorblätter oder Gondelverkleidungen von Windenergieanlagen genannt, die überwiegend als voluminöse GFK-Strukturen mit wenigen Tonnen Gewicht ausgebildet sind.

Die z. B. vier Magnus-Rotoren 10 stellen hierbei windbetriebene Antriebe für das erfindungsgemäße Schiff 1 dar. Es ist vorgesehen, das Schiff 1 grundsätzlich mit den Magnus-Rotoren anzutreiben und den Propeller bzw. den Hauptantrieb nur zur Ergänzung bei nicht ausreichenden Windbedingungen zu verwenden.

Die Formgebung des Rumpfes des Schiffes 1 ist derart ausgelegt, dass das Heck möglichst weit aus dem Wasser herausragt. Damit ist einerseits die Höhe des Hecks über dem Wasserspiegel, andererseits aber auch die Länge des Heckabschnittes gemeint, welcher ebenfalls über der Wasseroberfläche schwebt. Diese Ausgestaltung dient dazu, das Wasser frühzeitig vom Rumpf zu lösen, um eine hinter dem Schiff 1 herlaufende Welle zu vermeiden, da diese zu einem hohen Widerstand des Rumpfes führt, weil auch diese vom Schiff 1 hervorgerufene Welle durch die Maschinenleistung geschafft wird, welche dann aber nicht mehr zum Vortrieb zur Verfügung steht.

Der Bug des Schiffes 1 ist über eine relativ lange Strecke scharf geschnitten. Das Unterwasserschiff ist bis zu einer Höhe von ca. 3 m über der Konstruktions-Wasserlinie 13 im Hinblick auf hydrodynamische Aspekte widerstandsoptimiert ausgestaltet.

Somit ist der Rumpf des Schiffes 1 nicht auf eine maximale Tragfähigkeit, sondern auf einen minimalen Widerstand (aerodynamisch und hydrodynamisch) ausgelegt.

Die Aufbauten des Schiffes 1 sind strömungsgünstig ausgestaltet. Dies wird insbesondere dadurch erreicht, dass alle Flächen als glatte Flächen ausgestaltet sind. Durch die Ausgestaltung der Brücke 30 und der Schiffsaufbauten sollen vor allen Dingen Nachlaufwirbel vermieden werden, so dass die Ansteuerung der Magnus-Rotoren möglichst ungestört erfolgen kann. Die Brücke 30 wird vorzugsweise am Bug des Schiffes 1 angeordnet. Eine Anordnung der Aufbauten in der Mitte des Schiffes 1 ist ebenfalls möglich, würde aber die Beladung bzw. das Löschen der Ladung unnötig behindern, weil die Aufbauten damit genau über der Mitte des Laderaumes angeordnet wären.

Alternativ dazu kann die Brücke 30 am Heck des Schiffes 1 angeordnet werden, dies würde sich jedoch dahingehend als nachteilig erweisen, dass die Magnus-Rotoren eine einwandfreie Sicht nach vorne beeinträchtigen würden.

Der Antrieb bzw. der Vortrieb des Schiffes 1 ist für einen Windantrieb optimiert, so dass es sich bei dem Schiff 1 der vorliegenden Erfindung um ein Segelschiff handelt.

Die Magnus-Rotoren können beispielsweise im Bereich der Eckpunkte der Laderäume angeordnet werden, so dass sie eine rechteckige Fläche aufspannen können. Es sei jedoch darauf hingewiesen, dass ebenfalls eine andere Anordnung möglich ist. Die Anordnung der Magnus-Rotoren beruht auf einem Gedanken, dass eine bestimmte Rotorfläche erforderlich ist, um die gewünschte Antriebsleistung durch die Magnus-Rotoren zu erzielen. Durch eine Aufteilung dieser benötigten Oberfläche auf insgesamt vier Magnus-Rotoren werden die Abmessungen der einzelnen Magnus-Rotoren verringert. Durch diese Anordnung der Magnus-Rotoren bleibt eine größtmögliche durchgehende Fläche frei, welche insbesondere zum Be- und Entladen des Schiffes 1 dient sowie eine Aufnahme einer Deckenlast in Form von mehreren Containerladungen ermöglicht.

Die Magnus-Rotoren und der Hauptantrieb sind damit derart ausgelegt, dass der Hauptantrieb bei nicht ausreichendem Wind lediglich die Differenz der Leistung erbringen muss, die von den Magnus-Rotoren nicht geliefert werden kann. Eine Steuerung des Antriebs erfolgt somit derart, dass die Magnus-Rotoren 10 die maximale Leistung oder annähernd die maximale Leistung erzeugen. Eine Steigerung der Leistung der Magnus-Rotoren führt somit unmittelbar zu einer Einsparung an Brennstoff, da für den elektrischen Antrieb durch den Hauptantrieb keine zusätzliche Energie erzeugt werden muss. Die Einsparung an Brennstoff ergibt sich somit, ohne dass eine Anpassung zwischen einem durch eine Verbrennungsmaschine angetriebenen Propeller bzw. Hauptantrieb sowie der Steuerung der Magnus-Rotoren benötigt wird.

Das in Figur gezeigte Schiff 1 weist im Bereich des Vorschiffs 3 unterhalb eines Laderaums 7 eine Mehrzahl von Maschinenräumen 5 auf, von denen einer in Figur 1 in einem Ausbruch teilweise dargestellt ist. In den Maschinenräumen sind jeweils mehrere dieselelektrische Systeme angeordnet, welche zusammen einem Energieversorgungssystem 6 zugeordnet sind.

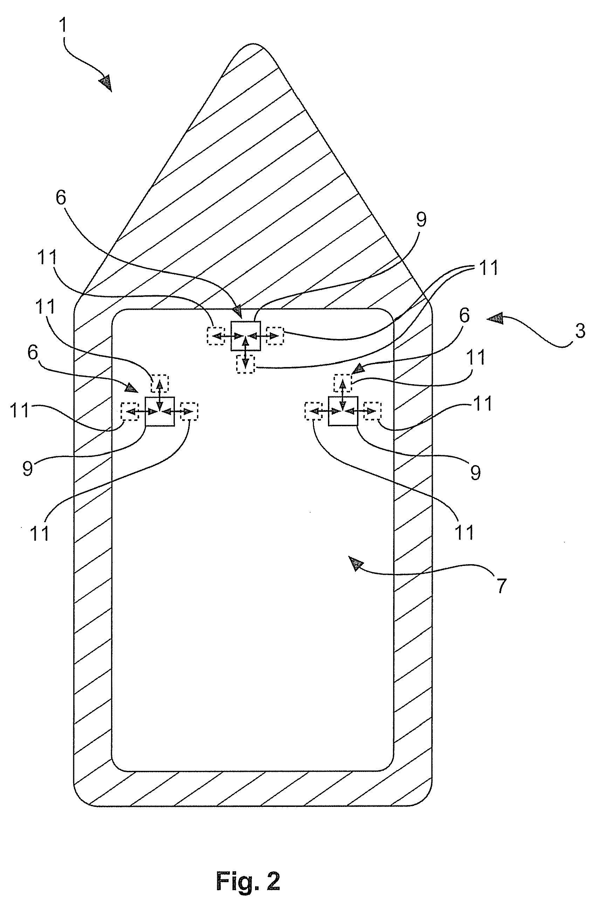

Figur 2 gibt nähere Auskunft über die Anordnung des Energieversorgungssystems 6 im Schiff 1. Figur 2 zeigt hierbei eine schematische Querschnittsansicht des Schiffs 1 von oben, wobei der Blick auf den Laderaum 7 freigegeben ist. In dem Laderaum 7 sind im Bereich 3 des Vorschiffs drei Öffnungen 9 vorgesehen. Unterhalb der Öffnungen 9 befinden sich mehrere dieselelektrische Systeme 11, die in Figur 2 angedeutet sind. Jeweils drei dieselelektrische Systeme 11 sind jeweils einer Öffnung 9 zugeordnet und in jeweils einem eigenen Raum angeordnet. All diese dieselelektrischen Systeme 11 sind Bestandteil des Energieversorgungssystems 6.

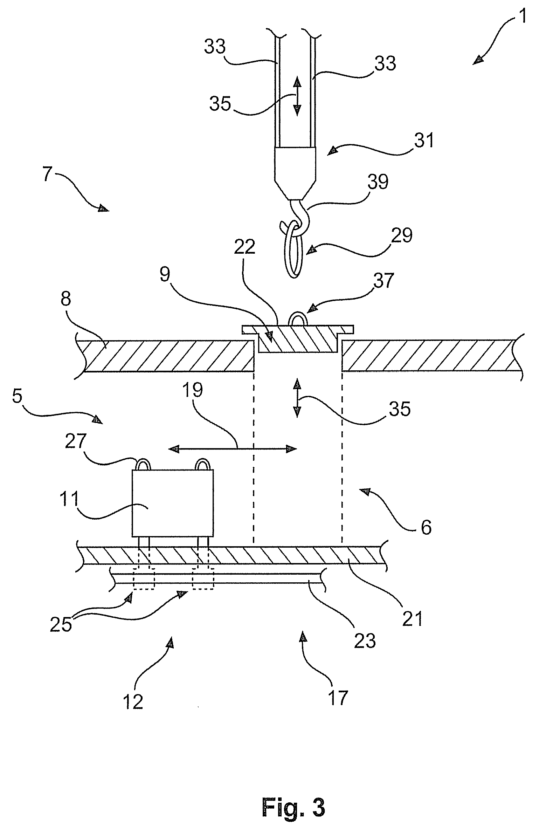

Figur 3 zeigt eine schematische Querschnittsansicht bzw. Seitenansicht eines Raums 5, der als Maschinenraum ausgebildet ist, unterhalb des Laderaums 7. Der Laderaum 7 und der darunter liegenende Raum 5 sind von einer Decke 8 getrennt. In der Decke 8 ist eine Öffnung 9 eingebracht, die sich vollständig durch die Decke 8 hindurch erstreckt und die mittels einer Abdeckung 22 verschlossen ist.

Innerhalb des Raums 5 ist eine Mehrzahl dieselelektrischer Systeme 11 angeordnet, wobei lediglich ein dieselelektrisches System in Figur 3 dargestellt ist. Das dieselelektrische System ist mittels (nicht dargestellter) Befestigungselemente in einer Betriebsposition 12 arretiert. Unterhalb des dieselelektrischen Systems 11 ist eine Mehrzahl von Schienen 23 angeordnet, die als Verfahrmittel dienen. Zwischen dem dieselelektrischen System 11 und den Schienen 23 sind Bodenplatten 21 angeordnet, die ein Betreten des Raums 5 ohne störenden Einfluss der Schienen 23 ermöglichen. Das dieselelektrische System 11 weist an seiner Oberseite mehrere Anschläge 27 zum Einbringen von Kraftübertragungsmitteln, wie beispielsweise Seilen, Ketten, Haken etc. auf.

Während das Schiff vorliegend als mit vier Magnus-Rotoren ausgebildet dargestellt ist, sind alternativ auch davon abweichende Anzahlen und Anordnungen von Magnus-Rotoren und andere Aufteilungen des Antriebs bevorzugt vorzusehen.

Anhand von Figur 3 wird im Folgenden der Austausch eines dieselelektrischen Systems beschrieben. Wenn bestimmt wurde, dass das dieselelektrische System 11 eine die Wartungsbedürftigkeit anzeigende Anzahl Betriebsstunden erreicht hat, wird das dieselelektrische System 11 zur Vorbereitung des Austauschs von seiner Betriebsposition 12 in eine Montage/Demontage-Position 17 bewegt. Hierzu werden zunächst die Bodenplatten 21, welche mit der Bewegung des Generators 11 interferieren, entfernt oder zur Seite bewegt. Sodann wird das dieselelektrische System 11 mit den Schienen 23 im Bereich von Verfahrabschnitten 25 in Kontakt gebracht. Dies kann durch Anheben oder Absenken des dieselelektrischen Systems 11 geschehen, beispielsweise mit Hilfe eines Flaschenzugs (nicht dargestellt).

Sobald das dieselelektrische System 11 von etwaigen Befestigungsmitteln befreit und mit den Schienen 23 in Kontakt gebracht ist, wird das dieselelektrische System 11 in Richtung des Pfeils 19 von der Betriebsposition 12 in die Montage/Demontage-Position 17 bewegt. All dies kann vorzugsweise vorbereitet werden und durchgeführt werden, bevor das Schiff einen Hafen erreicht hat. Nach Erreichen des Hafens wird lediglich noch die Abdeckung 22 von der Öffnung 9 mittels eines Krans 31 entfernt. Der Kran 31 weist zu diesem Zweck einen Kranhaken 39 auf, an dem ein Befestigungsmittel 29 angeordnet ist. Das Befestigungsmittel 29 kann ein Spannseil, Tragseil, eine Kette oder ähnliches sein. Der Kran 31 wird mittels eines Seilzugs 33 in Richtung des Pfeils 35 abwärts durch die Öffnung 9 hindurch bewegt. Das in Montage/Demontage-Position 17 befindliche dieselelektrischen System 11 wird sodann an den Anschlägen 27 mit dem Kraftübertragungsmittel 29 in Verbindung gebracht und ebenfalls in Richtung des Pfeils 35 mittels des Krans 31 angehoben. Optional ist es möglich, mittels des Krans das dieselelektrische System 11 in das Innere des Laderaums 7 zu verbringen, von wo aus er mit konventionellen Fahrzeugen fortbewegt wird, oder das dieselelektrische System 11 direkt mittels des Krans 31 ganz von Bord zu heben. Erforderlichenfalls wird sodann mittels des Krans auf identischem, umgekehrtem Wege ein neues bzw. gewartetes dieselelektrisches System in das Innere des Schiffs verbracht und von der Montage/Demontage-Position in die Betriebsposition 12 versetzt. Der gesamte Prozess des Austausches benötigt weniger als eine Stunde Zeitaufwand.

Für den Fall, dass ein Austausch mehrerer dieselelektrischer Systeme 11 notwendig wird, wird der vorstehend beschriebene Vorgang entsprechend wiederholt.

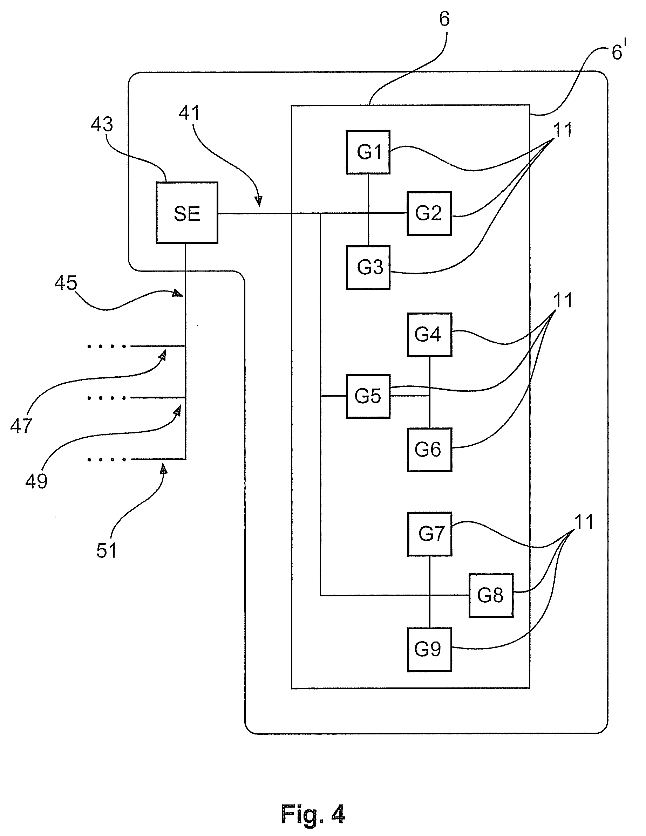

In Figur 4 ist systematisch dargestellt, wie das Energieversorgungssystem 6 gemäß der vorliegenden Erfindung in das Schiff integriert ist. Das Energieversorgungssystem 6 weist eine Anordnung 6' dieselelektrischer Systeme dieselelektrischer Systeme auf. Die Anordnung 6' dieselelektrischer Systeme umfasst insgesamt neuen Generatoren 11, die zu Gruppen ä jeweils drei Generatoren 11 zusammengefasst sind. Die Anordnung 6' dieselelektrischer Systeme steht mittels einer oder mehrerer Datenverbindungsleitungen 41 in Verbindung mit einer Steuereinheit 43. Die Steuereinheit 43 kommuniziert mit der Anordnung 6' dieselelektrischer Systeme und erforderlichenfalls mit jedem einzelnen Generator 11 innerhalb der Anordnung 6' dieselelektrischer Systeme. Weiterhin kommuniziert die Steuereinheit 43 mit einem Bordnetz 45. Das Bordnetz 45 umfasst die gesamte elektrische Versorgung des Schiffs, darunter den elektrischen Schiffsantrieb 47, den Antrieb mehrerer Magnus-Rotoren 49 sowie den Energiebedarf der allgemeinen Elektronik 51.

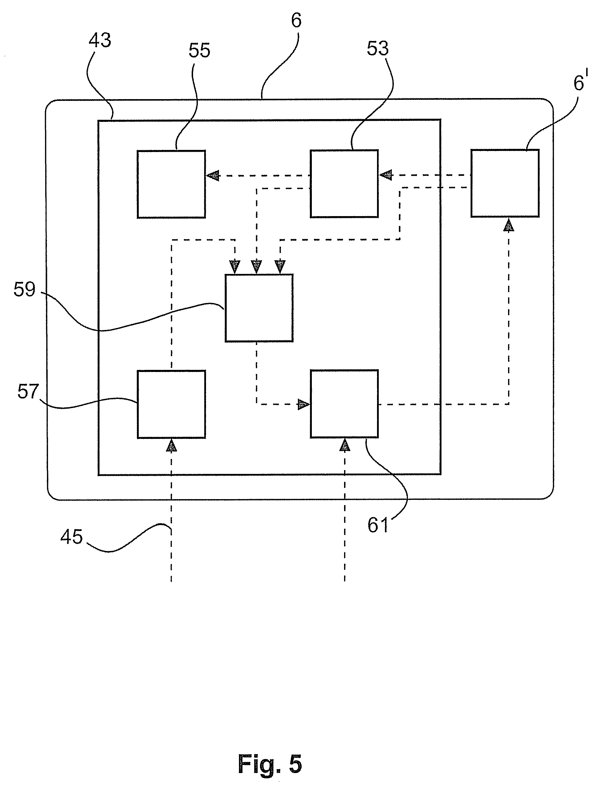

Figur 5 zeigt eine schematische Teilansicht der Steuerungseinheit 6. Die Steuereinheit 6 umfasst die Anordnung 6' dieselelektrischer Systeme, eine Betriebsstunden-Erfassungseinheit 53 (BEE), eine Wartungs-Feststelleinheit 55 (WFE), eine Energie-Vorgabeeinheit 57 (EVE), eine System-Bestimmungseinheit 59 (SBE), und eine Schalteinheit 61 (SE).

Im Betrieb des Schiffs bzw. des Energieversorgungssystems 6 überwacht die BEE 53 stetig oder in regelmäßigen Abständen die Betriebsstundenstände der dieselelektrischen Systeme der Anordnung 6' dieselelektrischer Systeme. Wenn eines der dieselelektrischen Systeme der Anordnung 6' dieselelektrischer Systeme einen kritischen Wert bezüglich der Betriebsstundenzahl erreicht hat, übermittelt die BEE 53 eine entsprechende Information an die WFE 55. Die WFE 55 ist dazu eingerichtet, ein Warnsignal zu erzeugen, welches die Wartungsbedürftigkeit des entsprechenden dieselelektrischen Systems repräsentiert. Optional ist die WFE 55 dazu eingerichtet, das Signal optisch, akustisch oder in Form von analoger oder digitaler Datenübertragung auszugeben. Alternativ übermittelt die BEE 53 die Betriebsstundenstände an die WFE 55. Letztere stellt bei Erreichen eines kritischen Betriebsstundenstandes eines der dieselelektrischen Systeme (oder mehrerer dieselelektrischer Systeme) die Wartungsbedürftigkeit des bzw. der entsprechenden dieselelektrischen Systeme fest und erzeugt sodann ein Warnsignal.

Die EVE 57 überwacht in regelmäßigen Abständen, vorzugsweise stetig den Energiebedarf des Bordnetzes 45. Die EVE 57 kommuniziert die Höhe des Energiebedarfs des Bordnetzes 45 entweder unmittelbar oder nach Konvertierung in ein diesen Bedarf repräsentierendes Signal an die SBE 59. Die SBE 59 empfängt den Status über die bereits in Betrieb befindlichen dieselelektrischen Systeme von der Anordnung 6' dieselelektrischer Systeme oder alternativ von der BEE 53. Von der BEE 53 empfängt die SBE 59 ebenfalls eine Information, ob und bejahendenfalls welches der dieselelektrischen Systeme bereits einen kritischen Betriebsstunden-Wert erreicht hat. Die SBE 59 vergleicht die mit der Anzahl der in Betrieb befindlichen dieselelektrischen Systeme korrespondierenden, zur Verfügung gestellten Leistung mit der von der EVE 57 kommunizierten angeforderten Energie des Bordnetzes 45 und trifft auf dieser Basis eine Entscheidung, ob dem Bordnetz 45 mehr Energie, weniger Energie oder derzeit ausreichend Energie zur Verfügung zu stellen ist bzw. gestellt wird. Wird dem Bordnetz 45 von dem Energieversorgungssystem 6 zu viel Energie zur Verfügung gestellt, trifft die SBE 59 eine Auswahl, wie viele und welche dieselelektrischen Systeme der Anordnung 6' dieselelektrischer Systeme abzuschalten sind. Hierbei berücksichtigt die SBE 59 auch, welche der dieselelektrischen Systeme aufgrund ihres Betriebsstundenstandes bevorzugt abzuschalten sind.

Für den Fall, dass dem Bordnetz 45 von dem Energieversorgungssystem 6 zu wenig Energie bereitgestellt wird, wählt die SBE 59 aus, wie viele und welche dieselelektrischen Systeme zugeschaltet werden müssen, um zusätzliche Leistung bereitzustellen. Auch hierbei berücksichtigt die SBE 59, welche dieselelektrischen Systeme auf Grund ihres erreichten Betriebsstundenstandes bevorzugt zugeschaltet werden und/oder bevorzugt abgeschaltet bleiben. Das Ergebnis dieser Auswahl wird von der SBE 59 an die SE 61 kommuniziert. Die SE 61 schaltet auf Basis der getroffenen Auswahl die entsprechenden dieselelektrischen Systeme zu oder ab. Optional kann die SE 61 auch manuell zum Zu- oder Abschalten bestimmter dieselelektrischer Systeme angesteuert werden. Dies wird durch Pfeil 63 symbolisiert.

Die Wartung des Schiffs, welches gemäß der vorliegenden Erfindung ausgebildet ist, vollzieht sich nach den folgenden Schritten:
Öffnen der gemeinsamen Öffnung, und
Entfernen des oder der dieselelektrischen Systeme durch die gemeinsame Öffnung.

Die Wartung wird weiterhin anhand der Schritte durchgeführt:
Lösen der Befestigung des oder der dieselelektrischen Systeme,
Verschieben des oder der dieselelektrischen Systeme von einer Betriebsposition in eine Montage/Demontage-Position,
Einführen eines Kranhakens durch die gemeinsame Öffnung,
Befestigen eines oder mehrerer dieselelektrischer Systeme an dem Kranhaken, Entfernen des oder der dieselelektrischen Systeme aus dem Inneren des Schiffs, Einführen eines oder mehrerer dieselelektrischen Systeme in das Innere des Schiffs an die Montage/Demontage-Position,
Lösen und Entfernen des Kranhakens aus dem Inneren des Schiffs,
Verschieben des oder der dieselelektrischen Systeme in deren Betriebsposition, Befestigen des oder der dieselelektrischen Systeme, und
Verschließen der gemeinsamen Öffnung. Das Lösen und Verschieben der dieselelektrischen Systeme genauso wie das Befestigen und Verschieben der dieselelektrischen Systeme von der Montage- in die Betriebsposition ist bereits während der Fahrt des Schiffs durchführbar, so dass Wartezeiten und Liegezeiten minimiert sind.

## Patentansprüche

1. Schiff (1), insbesondere Frachtschiff, mit einem Energieversorgungssystem (6), **gekennzeichnet durch** eine Mehrzahl von dieselelektrischen Systemen (11) zur Bereitstellung elektrischer Energie, die innerhalb des Schiffs (1) angeordnet sind,
wobei mehreren dieselelektrischen Systemen (11) jeweils eine gemeinsame Öffnung (9) zum Entfernen der dieselelektrischen Systeme (11) zugeordnet ist,
**gekennzeichnet durch** eine dem Energieversorgungssystem (6) zugeordnete Steuereinheit (43), welche in Abhängigkeit eines vorgegebenen Energiebedarfs zum Zu- und Abschalten Einzelner oder Mehrerer der dieselelektrischen Systeme (11) eingerichtet ist, wobei die Steuereinheit (43)
- zum Erfassen der Betriebsstundenanzahl jedes dieselelektrischen Systems (11) ausgebildet ist, und
- dazu eingerichtet ist, eine Auswahl bezüglich des Zu- und Abschalten einzelner dieselelektrischer Systeme (11) in Abhängigkeit der jeweils erfassten Betriebsstunden derart zu treffen, dass zwischen den dieselelektrischen Systemen (11) ein Unterschied bezüglich der Betriebsstundenanzahlen eingehalten wird.

2. Schiff (1) nach Anspruch 1,
**dadurch gekennzeichnet, dass** die dieselelektrischen Systeme (11) innerhalb des Schiffs (1) zwischen einer Betriebsposition und einer Montage/Demontage-Position (17) unterhalb der gemeinsamen Öffnung (9) bewegbar sind.

3. Schiff (1) nach Anspruch 2,
**dadurch gekennzeichnet, dass** die dieselelektrischen Systeme (11) mittels Verfahrmitteln verfahrbar sind.

4. Schiff (1) nach Anspruch 3,
**gekennzeichnet durch** entfernbare Bodenplatten (21), die oberhalb der Verfahrmittel angeordnet sind.

5. Schiff (1) nach einem der vorstehenden Ansprüche,
**dadurch gekennzeichnet, dass** die dieselelektrischen Systeme (11) in Betriebsposition (12) arretierbar sind, vorzugsweise mittels Verschrauben oder Verrasten.

6. Schiff (1) nach einem der vorstehenden Ansprüche,
**gekennzeichnet durch** einen Schiffskran (31), der dazu eingerichtet ist, mindestens eines der dieselelektrischen Systeme (11) **durch** die gemeinsame Öffnung (9) aus dem Inneren des Schiffs (1) zu entfernen und/oder in das Innere des Schiffs (1) einzuführen.

7. Schiff (1) nach einem der vorstehenden Ansprüchen,
**dadurch gekennzeichnet, dass** das Schiff (1) mindestens einen Magnus-Rotor (10) aufweist, der mittels von dem Energieversorgungssystem (6) bereitgestellter elektrischer Energie in Rotation versetzbar ist, und/oder
das Energieversorgungssystem (6) zur Versorgung eines oder mehrerer Elektromotoren zum Antrieb einer Schiffsschraube (50) und/oder eines oder mehrerer Querstrahlruder ausgebildet ist.

8. Energieversorgungssystem (6) für ein Schiff (1), insbesondere ein Frachtschiff, mit einer Mehrzahl von dieselelektrischen Systemen (11) zur Bereitstellung elektrischer Energie, die durch eine gemeinsame Öffnung (9) des Schiffs (1) entfernbar sind, **gekennzeichnet durch** eine Steuereinheit (43), welche
- eine Einheit (53) zum Erfassen der Betriebsstunden der dieselelektrischen Systeme (11) des Schiffs (1),
- eine Einheit (55) zum Feststellen eines Wartungsfalls, wenn ein dieselelektrisches System (11) eine vorbestimmte Anzahl von Betriebsstunden erreicht hat,
- eine Einheit (57) zum Vorgeben eines Energiebedarfs,
- eine Einheit (59) zum Bestimmen der für den vorgegebenen Energiebedarf benötigten Anzahl dieselelektrischer Systeme (11), und
eine Schalteinheit (61) zum Zu- und Abschalten eines oder mehrerer dieselelektrischer Systeme (11 in Abhängigkeit der jeweils erfassten Betriebsstunden derart, dass zwischen den dieselelektrischen Systemen (11) ein Unterschied bezüglich der Betriebsstundenanzahlen eingehalten wird oder einer manuell getroffenen Auswahl, aufweist.

9. Verfahren zur Steuerung eines Energieversorgungssystems (6) eines Schiffs (1), welches die Schritte umfasst:
- Erfassen der Betriebsstunden der dieselelektrischen Systeme (11) des Schiffs (1), und
- Feststellen eines Wartungsfalls, wenn ein dieselelektrisches System (11) eine vorbestimmte Anzahl von Betriebsstunden erreicht hat,
- Ermitteln und/oder Vorgeben eines Energiebedarfs,
- Bestimmen der für den vorgegebenen Energiebedarf benötigten Anzahl dieselelektrischer Systeme (11), und
- Zu- und Abschalten eines oder mehrerer dieselelektrischer Systeme (11) in Abhängigkeit der jeweils erfassten Betriebsstunden derart, dass zwischen den dieselelektrischen Systemen (11) ein Unterschied bezüglich der Betriebsstundenanzahlen eingehalten wird, oder in Abhängigkeit einer manuell getroffenen Auswahl.

## Claims

1. Ship (1), in particular freight ship, having an energy supply system (6), **characterised by** a plurality of diesel-electric systems (11) which are for providing electrical energy and which are arranged inside the ship (1),
wherein a common opening (9) for removing the diesel-electric systems (11) is associated in each case with a plurality of diesel-electric systems (11),
**characterised by** a control unit (43) which is associated with the energy supply system (6) and which in accordance with a predetermined energy requirement is configured to switch on and switch off individual or a plurality of the diesel-electric systems (11),
wherein the control unit (43)
- is constructed to detect the number of operating hours of each diesel-electric system (11), and
- is configured to make a selection with respect to switching on and switching off individual diesel-electric systems (11) in accordance with the operating hours detected in each case in such a manner that a difference with respect to the numbers of operating hours is complied with between the diesel-electric systems (11).

2. Ship (1) according to claim 1,
**characterised in that** the diesel-electric systems (11) can be moved within the ship (1) between an operating position and an assembly/disassembly position (17) below the common opening (9).

3. Ship (1) according to claim 2,
**characterised in that** the diesel-electric systems (11) can be displaced by means of displacement means.

4. Ship (1) according to claim 3,
**characterised by** base plates (21) which can be removed and which are arranged above the displacement means.

5. Ship (1) according to any one of the preceding claims, **characterised in that** the diesel-electric systems (11) can be secured in the operating position (12), preferably by means of screwing or engagement.

6. Ship (1) according to any one of the preceding claims, **characterised by** a ship's crane (31) which is configured to remove at least one of the diesel-electric systems (11) through the common opening (9) from the inner side of the ship (1) and/or to introduce it into the inner side of the ship (1).

7. Ship (1) according to any one of the preceding claims, **characterised in that** the ship (1) has at least one Magnus rotor (10) which can be caused to rotate by means of electrical energy provided by the energy supply system (6), and/or the energy supply system (6) is constructed to supply one or more electric motors for driving a ship's propeller (50) and/or one or more transverse thrusters.

8. Energy supply system (6) for a ship (1), in particular a freight ship,
having a plurality of diesel-electric systems (11) which are for providing electrical energy and which can be removed through a common opening (9) of the ship (1),
**characterised by** a control unit (43) which has
- a unit (53) for detecting the operating hours of the diesel-electric systems (11) of the ship (1),
- a unit (55) for determining a maintenance event when a diesel-electric system (11) has reached a predetermined number of operating hours,
- a unit (57) for predetermining an energy requirement,
- a unit (59) for determining the number of diesel-electric systems (11) required for the predetermined energy requirement, and
a switching unit (61) for switching on and off one or more diesel-electric systems (11) in accordance with the operating hours detected in each case in such a manner that a difference with respect to the numbers of operating hours is complied with between the diesel-electric systems (11), or a selection which has been made manually.

9. Method for controlling an energy supply system (6) of a ship (1),
which comprises the steps of:
- detecting the operating hours of the diesel-electric systems (11) of the ship (1), and
- determining a maintenance event when a diesel-electric system (11) has reached a predetermined number of operating hours,
- establishing and/or predetermining an energy requirement,
- determining the number of diesel-electric systems (11) required for the predetermined energy requirement, and
- switching on and off one or more diesel-electric systems (11) in accordance with the detected operating hours in each case in such a manner that a difference with respect to the numbers of operating hours is complied with between the diesel-electric systems (11), or in accordance with a selection which has been made manually.

## Revendications

1. Navire (1), en particulier cargo, avec un système d'alimentation en énergie (6), **caractérisé par** une pluralité de systèmes diesel-électriques (11) servant à fournir de l'énergie électrique, lesquels sont disposés à l'intérieur du navire (1),
dans lequel respectivement une ouverture (9) commune servant à retirer les systèmes diesel-électriques (11) est associée à plusieurs systèmes diesel-électriques (11),
**caractérisé par** une unité de commande (43) associée au système d'alimentation en énergie (6), laquelle est agencée pour mettre en service et mettre hors service divers ou plusieurs systèmes diesel-électriques (11) en fonction d'un besoin en énergie spécifié,
dans lequel l'unité de commande (43)
- est réalisée pour détecter le nombre d'heures de fonctionnement de chaque système diesel-électrique (11), et
- est agencée afin de faire un choix eu égard à la mise en service et à la mise hors service de divers systèmes diesel-électriques (11) en fonction des heures de fonctionnements respectivement détectées de telle manière qu'une différence eu égard aux nombres d'heure de fonctionnement soit respectée entre les systèmes diesel-électriques (11).

2. Navire (1) selon la revendication 1, **caractérisé en ce que** les systèmes diesel-électriques (11) peuvent être déplacés à l'intérieur du navire (1) entre une position de fonctionnement et une position de montage/démontage (17) sous l'ouverture (9) commune.

3. Navire (1) selon la revendication 2, **caractérisé en ce que** les systèmes diesel-électriques (11) peuvent être déplacés au moyen de moyens de déplacement.

4. Navire (1) selon la revendication 3, **caractérisé par** des panneaux de sol (21) pouvant être retirés, lesquels sont disposés au-dessus des moyens de déplacement.

5. Navire (1) selon l'une quelconque des revendications précédentes,
**caractérisé en ce que** les systèmes diesel-électriques (11) peuvent être bloqués en position de fonctionnement (12), de préférence au moyen d'un vissage ou d'un encliquetage.

6. Navire (1) selon l'une quelconque des revendications précédentes,
**caractérisé par** une grue de navire (31), qui est agencée pour retirer au moins un des systèmes diesel-électriques (11) par l'ouverture (9) commune hors de l'intérieur du navire (1) et/ou pour l'introduire à l'intérieur du navire (1).

7. Navire (1) selon l'une quelconque des revendications précédentes,
**caractérisé en ce que** le navire (1) présente au moins un rotor Magnus (10), qui peut être amené en rotation au moyen de l'énergie électrique fournie par le système d'alimentation en énergie (6), et/ou
**en ce que** le système d'alimentation en énergie (6) est réalisé afin d'alimenter un ou plusieurs moteurs électriques servant à entraîner une hélice de navire (50) et/ou un ou plusieurs propulseurs transversaux.

8. Système d'alimentation en énergie (6) pour un navire (1), en particulier un cargo,
avec une pluralité de systèmes diesel-électriques (11) servant à fournir de l'énergie électrique, qui peuvent être retirés par une ouverture (9) commune du navire (1), **caractérisé par** une unité de commande (43), qui présente
- une unité (53) servant à détecter des heures de fonctionnements de systèmes diesel-électriques (11) du navire (1),
- une unité (55) servant à constater un cas de maintenance, quand un système diesel-électrique (11) a atteint un nombre prédéfini d'heures de fonctionnement,
- une unité (57) servant à spécifier un besoin en énergie,
- une unité (59) servant à définir le nombre de systèmes diesel-électriques (11) requis pour le besoin en énergie spécifié, et
- une unité de commutation (61) servant à mettre en service et à mettre hors service un ou plusieurs systèmes (11) diélectriques en fonction des heures de fonctionnement respectivement détectées de telle manière qu'une différence eu égard aux nombres d'heures de fonctionnement soit respectée entre les systèmes diesel-électriques (11) ou en fonction d'un choix fait manuellement.

9. Procédé servant à commander un système d'alimentation en énergie (6) d'un navire (1), lequel comprend les étapes suivantes consistant à :
- détecter les heures de fonctionnement des systèmes diesel-électriques (11) du navire (1), et
- constater un cas de maintenance, quand un système diesel-électrique (11) a atteint un nombre prédéfini d'heures de fonctionnement,
- déterminer et/ou spécifier un besoin en énergie,
- définir le nombre de systèmes diesel-électriques (11) requis pour le besoin en énergie spécifié, et
- mettre en service et mettre hors service un ou plusieurs systèmes diesel-électriques (11) en fonction des heures de fonctionnement respectivement détectées de telle manière qu'une différence eu égard aux nombres d'heures de fonctionnement soit respectée entre les systèmes diesel-électriques (11) ou en fonction d'un choix fait manuellement.
